Europäisches Patentamt

European Patent Office

Office européen des brevets

(11) Veröffentlichungsnummer: **0 629 846 B1**

## EUROPÄISCHE PATENTSCHRIFT

(45) Veröffentlichungstag der Patentschrift: **22.02.95**

(51) Int. Cl.⁶: **G01L 19/00**, G01L 7/02

(21) Anmeldenummer: **93109689.5**

(22) Anmeldetag: **17.06.93**

(54) **Rohrdruckmittler und Messanordnung mit einem Rohrdruckmittler.**

(43) Veröffentlichungstag der Anmeldung:
**21.12.94 Patentblatt 94/51**

(45) Bekanntmachung des Hinweises auf die
Patenterteilung:
**22.02.95 Patentblatt 95/08**

(84) Benannte Vertragsstaaten:
**BE DE FR GB LU NL**

(56) Entgegenhaltungen:
EP-A- 0 330 891
DE-A- 2 753 731
FR-A- 2 435 025
US-A- 4 207 551
US-A- 5 154 083

**PATENT ABSTRACTS OF JAPAN vol. 4, no.
21 (E-172)21. Februar 1980 & JP-A-54159276**

(73) Patentinhaber: **WIKA ALEXANDER WIEGAND
GmbH & CO.
Alexander-Wiegand-Strasse
D-63911 Klingenberg (DE)**

(72) Erfinder: **Neubeck, Kurt, Dr.
Am Thorwengert 44
D-8760 Miltenberg (DE)**
Erfinder: **Klein, Kurt
Untere Bergstrasse 3
D-8763 Klingenberg (DE)**
Erfinder: **Heller, Heinz
Schneeberger Strasse 13
D-6968 Walldürn-Rippberg (DE)**
Erfinder: **Roth, Alfred
Hauptstrasse 37
D-8761 Schneeberg (DE)**

(74) Vertreter: **Tiedtke, Harro, Dipl.-Ing.
Patentanwaltsbüro
Tiedtke-Bühling-Kinne & Partner
Bavariaring 4
D-80336 München (DE)**

**Beschreibung**

Die Erfindung bezieht sich auf einen Rohrdruckmittler gemäß dem Oberbegriff von Patentanspruch 1 sowie eine Meßanordnung mit einem Rohrdruckmittler gemäß dem Oberbegriff von Patentanspruch 8.

Rohrdruckmittler kommen dann zur Anwendung, wenn ein auf Druck ansprechendes Gerät aus bestimmten Gründen nicht direkt mit dem Meßstoff in Berührung kommen soll. Dies kann beispielsweise dann der Fall sein, wenn der Meßstoff korrosiv ist und im Falle des direkten Kontaktes mit dem Gerät letztes angreifen würde, wenn der Meßstoff hoch viskos ist und dadurch die Druckweiterleitung in den Toträumen des Gerätes behindert würde, wenn der Meßstoff zur Kristallisation oder Polymerisation neigt und dadurch Anschlußleitungen zum Gerät verstopfen würde oder wenn der Meßstoff eine hohe Temperatur hat, die zu einer zu hohen Temperaturbelastung des Gerätes führen würde. Diese Aufzählung von Anwendungsfällen eines Rohrdruckmittlers ist nicht abschließend und enthält lediglich einige mögliche Beispiele.

Bei dem auf Druck ansprechenden Gerät handelt es sich in der Mehrzahl der Anwendungsfälle um ein Druckmeßgerät zur Messung und Anzeige des Überdrucks des Meßstoffes. Es kann sich dabei aber auch um einen Druckmeßumformer, einen Druckschalter, einen Druckaufnehmer oder ein Differenzdruckmeßgerät oder dergleichen handeln. Wenn im folgenden von einer Meßanordnung mit einem Rohrdruckmittler und einem Druckmeßgerät gesprochen wird, so handelt es sich bei dem Druckmeßgerät um ein Beispiel für eines der möglichen auf Druck ansprechenden Geräte, ohne daß eine Beschränkung auf Meßanordnungen erfolgen soll, bei denen das auf Druck ansprechende Gerät ein Druckmeßgerät ist.

Rohrdruckmittler weisen üblicherweise ein rohrförmiges, steifes Gehäuse und eine dünnwandige, rohrförmige Hülse auf, die innerhalb des Gehäuses angeordnet ist und gemeinsam mit diesem eine Kammer begrenzt, die mit einer Übertragungsflüssigkeit gefüllt ist. Das Innere der Hülse bildet einen Meßraum, in dem sich der Meßstoff befindet, der den Meßraum beispielsweise durchströmt, wenn der Rohrdruckmittler einen Abschnitt einer Rohrleitung für den Meßstoff bildet. Durch die fluiddicht mit dem Gehäuse verbundene Hülse sind der Meßstoff und die Übertragungsflüssigkeit voneinander getrennt. Bei einem Anstieg des Drucks im Meßraum wird die Hülse im Bereich der Kammer elastisch derart verformt, daß sie Füllflüssigkeit aus der Kammer zu drängen sucht, was von einem entsprechenden Druckanstieg begleitet ist, wenn die Füllflüssigkeit nicht oder nur gegen einen wachsenden Widerstand aus der Kammer strömen kann. Der Druck der Füllflüssigkeit kann dann mittels des Druckmeßgerätes gemessen werden und stellt ein Maß für den Druck des Meßstoffs im Meßraum dar.

Es sind Rohrdruckmittler bekannt (DE-U-72 44 122, DE-U-79 20 915, EP-A-0 092 827, DE-A-39 03 195, US-A-4 534 224), bei denen die Hülse gebildet ist durch einen Schlauchabschnitt aus einem gummielastischen Material mit einem kreisringförmigen Querschnittsprofil. Wegen des vergleichsweise geringen Elastizitätsmoduls des gummielastischen Materials läßt sich die Hülse bei einem Anstieg des Drucks im Meßraum in radialer Richtung aufweiten, wobei die Wand der Hülse tangential und axial gedehnt wird. Das bei dieser Aufweitung aus der Kammer verdrängte Füllflüssigkeitsvolumen, das sogenannte Arbeitsvolumen, reicht für zahlreiche Anwendungsfälle aus. Nachteilig bei derartigen Rohrdruckmittlern mit einer gummielastischen Hülse ist jedoch, daß die Kennlinie, d.h. die Abhängigkeit des Arbeitsvolumens vom Druck im Meßraum, stark von der erwünschten Liniarität abweicht. Darüberhinaus eignen sich gummielastische Hülsenwerkstoffe für zahlreiche Anwendungsfälle nicht; dies kann beispielsweise dann der Fall sein, wenn die chemische Beständigkeit des gummielastischen Hülsenwerkstoffs gegenüber dem Meßstoff unzureichend ist.

Ferner sind Rohrdruckmittler gemäß dem Oberbegriff von Patentanspruch 1 sowie Meßanordnungen gemäß dem Oberbegriff von Patentanspruch 8 bekannt, bei denen die Hülse aus einem metallischen Werkstoff besteht (DE-A-36 13 204, DE-U-88 09 637). Die Ausbildung der Hülse aus dem metallischen Werkstoff, beispielsweise aus CrNiMo-Stahl, Monel (Nickel-Kupfer-Legierung mit 30 bis 40% Kupfer), Hastelloy (Nickel-Molybdän-Eisen-Legierung mit über 55% Nickel), Tantal oder Titan, ergibt eine dem Einsatzgebiet anpaßbare hohe chemische Beständigkeit und auch hohe mechanische Verschleißfestigkeit sowie verringerte Bruchgefahr. Die bekannten, gattungsgemäßen Druckmittler weisen stets eine Hülse mit zumindest einem als ebene Membran wirkenden Abschnitt auf, weil das durch axiale und tangentiale, elastische Dehnung der Wand der Hülse erzielbare Arbeitsvolumen wegen des vergleichsweise hohen Elastizitätsmoduls der metallischen Werkstoffe zu gering ist. Daher hat die Hülse bei bekannten Druckmittlern beispielsweise ein prismatisches Querschnittsprofil, beispielsweise in Form eines regelmäßigen Sechsecks (DE-U-88 09 637) oder ein sternförmiges Querschnittsprofil mit in Längsrichtung der Hülse verlaufenden Rillen (DE-A-36 13 204). Die Formgebung der Hülse erfolgt vor dem Einsetzen derselben in das Gehäuse oder nach dem Einsetzen der Hülse in das Gehäuse entweder durch hydraulisches Andrücken unter plastischer Verformung gegen die komplementär zur gewünschten Hülsenform geformte Innenfläche des Gehäuses oder durch gemeinsames plastisches Verformen von Gehäuse und Hülse mittels eines Werkzeugs von außen. In jedem Fall ist die Fertigung der Hülse aufwendig.

Der Erfindung liegt die Aufgabe zugrunde, den gattungsgemäßen Rohrdruckmittler sowie die damit versehene Meßanordnung dahingehend weiterzubilden, daß die Fertigung vereinfacht ist.

Diese Aufgabe wird erfindungsgemäß durch den Rohrdruckmittler nach Patentanspruch 1 sowie die Meßanordnung nach Patentanspruch 8 gelöst. Erfindungsgemäß ist vorgesehen, daß die aus einem metallischen Werkstoff bestehende Hülse im Bereich der Kammer bei Druckgleichheit zwischen Meßgerät und Kammer ein kreisringförmiges Querschnittsprofil hat und daß die Hülse im Bereich der Kammer durch relativ höheren Druck in der Kammer als im Meßraum derart elastisch verformbar ist, daß das Volumen der Kammer aufgrund der Verformung größer als bei der Druckgleichheit ist. Bei der Erfindung ist die Hülse im unbelasteten Zustand, d.h. bei Druckgleichheit auf ihre Außenseite und ihre Innenseite, stets rund. Es wurde gefunden, daß eine ein kreisringförmiges Querschnittsprofil aufweisende, also runde Hülse, obwohl sie aus einem metallischen Werkstoff besteht, bei einem Rohrdruckmittler dann anwendbar ist, wenn im Betrieb in der Kammer stets ein größerer Druck als im Meßraum herrscht. Die erfindungsgemäße Meßanordnung zeichnet sich daher dadurch aus, daß die Übertragungsflüssigkeit im Betrieb bis zum Nenndruck der Meßanordnung stets unter einem Druck gehalten ist, der größer als der Druck des Meßstoffs im Meßraum des Rohrdruckmittlers ist. Die Differenz zwischen dem Druck in der Kammer und im Meßraum wird im folgenden als Systemüberdruck bezeichnet. Ausgenutzt wird bei der Erfindung, daß ein ausreichend hoher Systemüberdruck die Hülse elastisch derart verformt, daß ihr Querschnittsprofil von der Kreisringform abweicht, die Hülse also durch den Systemüberdruck unrund wird. Bei einem Druckanstieg im Meßraum steigt zwar der Druck in der Kammer, der Systemüberdruck nimmt jedoch ab, so daß die durch den zuvor höheren Systemüberdruck bewirkte Verformung der Hülse teilweise rückgängig gemacht wird und dadurch Arbeitsvolumen aus der Kammer verdrängt wird. Es hat sich in überraschender Weise gezeigt, daß bei dem erfindungsgemäßen Rohrdruckmittler die Kennlinie, also die Abhängigkeit des Arbeitsvolumens vom Druck im Meßraum, ein hohes Maß an Liniarität hat, die nicht schlechter ist als die bei herkömmlichen Rohrdruckmittlern mit prismatischen oder sternförmigen Querschnittsprofilen.

Da bei dem erfindungsgemäßen Rohrdruckmittler die unbelastete Hülse ein kreisringförmiges Querschnittsprofil hat, wird sie mit einem solchen Querschnittsprofil gefertigt und braucht während keiner Phase der Fertigung ein unrundes Querschnittsprofil erzeugt zu werden. Die Fertigung der Hülse und somit des Rohrdruckmittlers ist damit erheblich vereinfacht. Als weiterer Vorteil des erfindungsgemäßen Rohrdruckmittlers ergibt sich, daß die Meßkammer radial nach außen durch eine kreiszylindrische Fläche begrenzt ist, so daß die Meßkammer das gleiche Querschnittsprofil wie die Rohrleitung hat, in die der Rohrdruckmittler eingesetzt ist. Der Rohrdruckmittler erzeugt somit keine Störung der Meßstoffströmung. Ferner kann der Rohrdruckmittler wegen seiner kreiszylindrischen Meßraumwand besser gereinigt werden als ein Rohrdruckmittler mit einer unrunden Meßraumwand; die Mulchbarkeit ist somit verbessert.

In vorteilhafter Ausbildung der Erfindung kann vorgesehen sein, daß die Innenfläche des Gehäuses im Bereich der Kammer eine kreiszylindrische Form hat. Im Zusammenwirken mit dem kreisringförmigen Querschnittsprofil der Hülse ermöglicht dies ein geringes Volumen der Kammer, was unter anderem zum Zweck der Niedrighaltung von Temperaturfehlern wünschenswert ist. Ein geringes Kammervolumen kann bei herkömmlichen Rohrdruckmittlern mit einer prismatischen oder längsgerillten Hülse nur dadurch herbeigeführt werden, daß die Innenfläche des Gehäuses eine zur Hülse komplementäre Gestalt hat, also ebenfalls prismatisch oder längsgerillt ausgebildet ist. Diese Ausbildung des erfindungsgemäßen Rohrdruckmittlers führt somit nicht nur zu einer wesentlichen Vereinfachung der Fertigung der Hülse, sondern auch zu einer wesentlichen Vereinfachung der Fertigung des Gehäuses.

Vorteilhafte Ausgestaltungen des Rohrdruckmittlers nach Anspruch 1 und der Meßanordnung nach Anspruch 8 sind in den übrigen Ansprüchen gekennzeichnet.

Weitere Merkmale und vorteilhafte Ausgestaltungen ergeben sich auch aus der folgenden Beschreibung von Ausführungsbeispielen unter Bezugnahme auf die Zeichnung. Es zeigen:

Fig. 1 eine Ansicht, teilweise im Längsschnitt, eines Ausführungsbeispiels eines erfindungsgemäßen Rohrdruckmittlers;

Fig. 2 einen Querschnitt senkrecht zur Achse des Rohrdruckmittlers gemäß A-B in Fig. 1;

Fig. 3 eine perspektivische Ansicht einer Hülse des Rohrdruckmittlers gemäß Fig. 1;

Fig. 4 eine vergrößerte Einzelheit X in Fig. 1;

Fig. 5 schematisch eine Ansicht einer Meßanordnung mit dem Rohrdruckmittler gemäß Fig. 1;

Fig. 6 eine Querschnittdarstellung zur Erläuterung des Funktionsprinzips des Rohrdruckmittlers;

Fig. 7 ein Diagramm, das anhand eines Beispiels den Zusammenhang zwischen verschiedenen Drücken in der Meßanordnung nach Fig. 5 wiedergibt;

Fig. 8 eine schematische Darstellung zur Erläuterung des Begriffs "Unrundheit";

Fig. 9 eine Fig. 4 ähnliche Darstellung einer abgewandelten Ausführungsform des Rohrdruckmittlers, und

Fig. 10 eine Fig. 4 ähnliche Darstellung einer weiteren abgewandelten Ausführungsform des Rohrdruckmittlers.

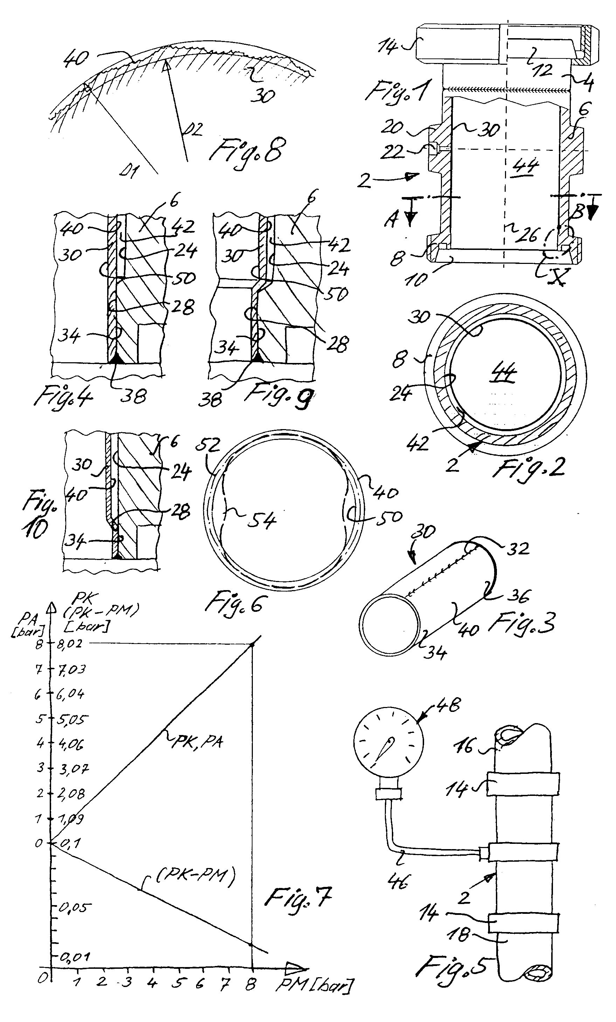

Der in Figs. 1 und 2 dargestellte Rohrdruckmittler umfaßt ein rohrförmiges, steifes Gehäuse 2, das beim dargestellten Ausführungsbeispiel aus zwei Gehäuseabschnitten 4 und 6 zusammengeschweißt ist. An seinem einen, in Fig. 1 unteren Ende weist das Gehäuse 2 einen ersten Verbindungsflansch 8 mit einer ringförmigen, konischen, radial innen liegenden ersten Dichtfläche 10 auf. An seinem anderen, in Fig. 1 oberen Ende weist das Gehäuse 2 einen zweiten Verbindungsflansch 12 mit einer ringförmigen, konischen, radial außen liegenden zweiten Dichtfläche auf. Der zweite Verbindungsflansch 12 wird hintergriffen von einer Überwurfmutter 14. Die beiden Verbindungsflansche 8 und 12 sowie die Überwurfmutter 14 dienen dazu, den Rohrdruckmittler unter Verwendung einer weiteren Überwurfmutter 14 mit Abschnitten 16 und 18 einer Rohrleitung verbinden zu können (siehe Fig. 5), durch die ein Meßstoff strömt.

Ungefähr in seiner Längsmitte ist das Gehäuse 2 mit einem umlaufenden Flansch 20 versehen, in dem eine radial verlaufende Anschlußbohrung 22 als Durchgangsbohrung ausgebildet ist. Annähernd über die gesamte Länge des Rohrdruckmittlers erstreckt sich eine kreiszylindrische Innenfläche 24 des Gehäuses 2 konzentrisch zur Gehäuseachse 26 und mit konstantem Durchmesser. Die Innenfläche 24 geht an den beiden Enden des Gehäuses 2 über in ebenfalls kreiszylindrische Anlageflächen 28 von denen lediglich die unteren in Fig. 4 erkennbar ist und die einen nur wenig kleiner Durchmesser als die Innenfläche 24 haben. Bei einem Durchmesser der Innenfläche 24 von 50 mm hat die Anlagefläche 28 beispielsweise einen Durchmesser von 49 mm. Die beiden Anlageflächen 28 sind ebenfalls konzentrisch zur Gehäuseachse 26.

In das Gehäuse eingesetzt ist eine dünnwandige, rohrförmige Hülse 30, die in Fig. 3 schematisch und perspektivisch gezeigt ist. Die Hülse 30 ist aus einem rechteckigen Zuschnitt aus Metallblech konstanter Dicke zu dem in Fig. 3 gezeigten Kreiszylinder gebogen worden. Die dadurch entlang einer Mantellinie des Kreiszylinders aneinanderstoßenden Ränder des Zuschnitts sind entlang einer Schweißnaht 32 miteinander verschweißt. An ihren beiden axialen Enden weist die Hülse kreiszylindrische Außenflächen 44 und 46 auf, mit denen die Hülse 30 in die Anlageflächen 28 eingepaßt ist. Durch eine umlaufende Schweißnaht 38 ist die Hülse 30 sowohl an ihrem unteren Ende als auch an ihrem oberen Ende gasdicht mit dem Gehäuse 2 verschweißt.

Der metallische Werkstoff, aus dem die Hülse 30 besteht, ist dem beabsichtigen Anwendungsfall des Druckmittlers, insbesondere der Beschaffenheit des Meßstoffs angepaßt. Bei diesem Werkstoff kann es sich beispielsweise um die bereits einleitend genannten Werkstoffe CrNiMo-Stahl, Monel, Hastelloy, Tantal oder Titan, handeln.

Zwischen den beiden an den Enden der Hülse 30 ausgebildeten und in Anlage an den Anlageflächen 28 befindlichen Außenflächen 34 und 36 weist die Hülse 30 eine Außenfläche 40 auf. Diese Außenfläche 40 der Hülse 30 und die Innenfläche 24 des Gehäuses 2 begrenzen gemeinsam eine ringförmige Kammer 42, in die die Anschlußbohrung 22 mündet. Die Kammer 42 hat eine radiale Tiefe entsprechend dem Radiusunterschied zwischen der Innenfläche 24 und der Anlagefläche 28, so daß die Tiefe der Kammer gering ist und die Kammer in der maßstäblichen Zeichnung gemäß Fig. 1 nicht erkennbar ist. Um die Kammer 42 erkennbar zu machen, ist sie in Fig. 2 mit nicht maßstäblicher, zu großer radialer Tiefe gezeigt.

Die Kammer 42 ist zur Aufnahme einer Übertragungsflüssigkeit bestimmt, während das Innere der Hülse 30 einen Meßraum 44 zur Aufnahme des Meßstoffes bildet.

Bei der in Fig. 5 gezeigten Meßanordnung ist an die Anschlußbohrung 22 eine Verbindungsleitung 46 in Form einer Kapillare angeschlossen, die zu einem auf Druck ansprechenden Gerät führt, das beim dargestellten Ausführungsbeispiel der Meßanordnung ein Druckmeßgerät 48 in Form eines Rohrfedermanometers ist. Bei der Meßanordnung gemäß Fig. 5 sind die Kammer 42, die Verbindungsleitung 46 und die entsprechenden Räume des Druckmeßgerätes 48, insbesondere das Innere von dessen Rohrfeder, mit der Übertragungsflüssigkeit gefüllt, wobei die mit der Übertragungsflüssigkeit gefüllten Räume des Druckmeßgerätes 48, der Verbindungsleitung 46 und des Rohrdruckmittlers ein verschlossenes System bilden, in dem die Masse der darin eingeschlossenen Füllflüssigkeit im Betrieb konstant ist. In der Rohrleitung, zu der die Abschnitte 16 und 18 gehören, und somit auch im Meßraum 44 des Rohrdruckmittlers befindet sich der Meßstoff, dessen Druck mit der Meßanordnung gemäß Fig. 5 gemessen werden soll. Während der Druck in der Kammer 42 einerseits und der Druck im Meßraum 44 andererseits gleich sind, so daß die Hülse 30 unbelastet ist, hat die Hülse im Bereich der Kammer 42 ein kreisringförmiges Querschnittsprofil, wie dies in Fig. 2 und auch in Fig. 6 erkennbar ist, die in einem zur Gehäuseachse 26 senkrechten Schnitt mit ausgezogenen Linien die Außenfläche 40 der Hülse 30 als Kreis und die Innenfläche 50 der Hülse 30 ebenfalls als Kreis zeigt. In Fig. 6 ist die Dicke der Wand der Hülse 30 überhöht dargestellt, also zu groß im Vergleich zu den Durchmessern der Innenfläche 50 und der Außenfläche 40. Im unbelasteten Zustand der Hülse 30 hat diese somit über ihre gesamte Länge ein kreisringförmiges Querschnittsprofil. Dadurch ist die Fertigung der Hülse 30 im Vergleich zu solchen Hülsen, die im unbelasteten Zustand ein prismatisches oder stern-förmiges Querschnittsprofil haben, wesentlich ver-einfacht. Beim dargestellten Ausführungsbeispiel hat die Hülse 30 darüberhinaus über ihre gesamte Länge einen konstanten Außendurchmesser und einen konstanten Innendurchmesser.

Wenn der vorstehend anhand der Figuren 1 bis 4 und 6 erläuterte Rohrdruckmittler zur Bildung der Meßanordnung nach Fig. 5 mit den Abschnitten 16 und 18 der Rohrleitung sowie der Verbindungsleitung 46 und dem Druckmeßgerät 18 verbunden worden ist, werden zunächst diejenigen Räume der Meßanordnung, die zur Aufnahme der Füllflüssigkeit bestimmt sind, evakuiert und im Anschluß daran über eine (nicht dargestellte) Füllöffnung mit der Übertragungsflüssigkeit gefüllt. Bevor das mit der Übertragungsflüssigkeit gefüllte System verschlossen wird, wird die Übertragungsflüssigkeit in diesem System unter einen solchen Druck gesetzt, daß der Druck der Übertragungsflüssigkeit in der Kammer 42, der im folgenden als Druck PK bezeichnet wird, stets größer ist als der Druck des Meßstoffs im Meßraum 44, der im folgenden als Druck PM bezeichnet wird. Die Druckdifferenz (PK - PM) wird hier als Systemüberdruck bezeichnet. Der Systemüberdruck ist somit stets positiv. Die Aussage, daß der Systemüberdruck stets positiv ist, gilt für die Meßanordnung, während sie im Betrieb ist und für den Druckmeßbereich, für den die Meßanordnung bestimmt ist, d.h. für Drücke PM zwischen der unteren Grenze des Meßbereichs und dem Nenndruck der Meßanordnung.

Der Systemüberdruck wird so hoch eingestellt, daß die Hülse 30 bei einem Druck PM an der unteren Grenze des Druckmeßbereichs derart verformt ist, daß ihr Querschnittsprofil von der Kreisringform abweicht. Diese Abweichung kann aus einer radial nach innen gerichteten Einbeulung oder mehreren solchen Einbeulungen bestehen, die über den Umfang und/oder die Länge der Hülse verteilt sind. Ein Beispiel hierfür zeigt Fig. 6. In Fig. 6 ist eine Mittellinie 52 eingezeichnet, die in der Mitte zwischen der Außenfläche 40 und der Innenfläche 50 der Hülse 30 verläuft. Diese Mittellinie 52 ist bei unbelasteter Hülse 30 ein Kreis. Nach der elastischen Verformung aufgrund des Systemüberdrucks ist der Kreis zu der in Fig. 6 gestrichelt eingezeichneten Mittellinie 54 geformt, die einer "8" ähnelt. Klargestellt sein, daß die Mittellinie 54 lediglich ein Beispiel für eine mögliche Verformung der Hülse 30 aufgrund des Systemüberdrucks ist und daß zahlreiche andere Gestalten der Mittellinie nach der elastischen Verformung möglich sind als die Gestalt der gezeigten Mittellinie 54.

Ferner wird darauf hingewiesen, daß in Fig. 6 die Abweichung der Mittellinie 54 von der Mittellinie 42 stark übertrieben dargestellt ist, um sie erkennbar zu machen. Die tatsächliche Verformung gegenüber der Mittellinie 52 ist derart gering, daß sie in der Größenordnung der Zeichengenauigkeit von Fig. 6 liegt.

Das Einstellen des Systemüberdrucks wird im folgenden anhand des Diagramms gemäß Fig. 7 beispielhaft erläutert. Auf der Abszisse des Diagramms gemäß Fig. 7 ist der Druck PM aufgetragen. Auf der Ordinate ist der Druck PK sowie der Systemüberdruck (PK - PM) aufgetragen. Ferner ist auf der Ordinate der am Druckmeßgerät 48 gezeigte und ablesbare Druck PA aufgetragen. Für das Beispiel gemäß Fig. 7 liegt die untere Grenze des Druckmeßbereichs des zu messenden Überdrucks des Meßstoffes bei PH = 0 bar. Die obere Grenze des Druckmeßbereichs, d.h. der Nenndruck, liegt bei PM = 8 bar. Der Systemüberdruck (PK - PM) ist so eingestellt, daß er 0,1 bar an der unteren Druckgrenze PM = 0 bar beträgt. Dieser Systemüberdruck sei ausreichend, die Hülse 30 in einer der Mittellinie 54 entsprechenden Weise zu verformen.

Bei PM = 0 bar ist der Systemüberdruck (PK - PM) gleich dem Druck PK in der Kammer 42, der auch am Druckmeßgerät 48 anliegt. Auf diesen Druck ist der Nullpunkt der Anzeige des Druckmeßgeräts 48 gelegt, so daß das Druckmeßgerät 48 für den Druck PK = 0,1 bar den Druck PA = 0 bar anzeigt.

Wenn dann der Druck PM im Meßraum 44 ansteigt, sinkt der Systemüberdruck (PK - PM), was eine teilweise Rückbildung der Verformung bzw. Einbeulung der Hülse 30 zur Folge hat. Diese Annäherung der Hülse 30 an ihr kreiszylindrisches Querschnittsprofil ist zwangsläufig begleitet von der Verdrängung eines Arbeitsvolumens der Füllflüssigkeit aus der Kammer 42 und einem Anstieg des Drucks PK in der Kammer 42. Dieser Druckanstieg wirkt auch am Druckmeßgerät 48 und wird von diesem als erhöhter Druck PA angezeigt. Die Vorgänge bei einem Sinken des Drucks PM im Meßraum 44 verlaufen analog.

Die vorstehend beschriebene Wirkungsweise bleibt bei steigendem Druck PM erhalten, bis der Systemüberdruck (PK - PM) auf Null reduziert ist und die Hülse 30 zu ihrem kreisringförmigen Querschnittsprofil zurückgekehrt ist. Wenn der Systemüberdruck negative Werte annimmt, nimmt das Arbeitsvolumen stark ab, weil die Hülse 30 nur noch durch axiale und tangentiale Dehnung der Wand der Hülse das Volumen der Kammer 42 verringern kann und diese Dehnung aufgrund des metallischen Werkstoffs der Hülse gering ist. Wenn der Druck PM im Meßraum 44 sehr hohe Werte annimmt, kommt die Hülse 30 an der Innenfläche 24 des Gehäuses 2 zur Anlage, bevor die Hülse 30 bricht, so daß dadurch für eine Überlastsicherung gesorgt ist.

Solange der beschriebene Rohrdruckmittler und die beschriebene Meßanordnung in vorstehend beschriebener Weise, d.h. mit einem positiven Systemüberdruck, betrieben werden, ergibt sich einerseits eine überraschend gute Liniarität der Kennlinie zwischen dem Arbeitsvolumen und dem Druck im Meßraum sowie andererseits ein ausreichend hohes Arbeitsvolumen.

Die Höhe des Systemüberdrucks am Nullpunkt der Anzeige, d.h. an der unteren Grenze des Druckmeßbereichs, muß abgestimmt sein auf den Druckmeßbereich, die Abmessungen und den Werkstoff der Hülse. Beispielsweise für eine Hülse aus CrNiMo-Stahl mit einer Länge von 120 mm, einem Außendurchmesser von 50 mm, einer Wandstärke von 0,05 mm und einem Druckmeßbereich von 1 bar bis 25 bar eignet sich ein Systemüberdruck von 0,1 bar an der unteren Grenze des Druckmeßbereichs, d.h. bei PM = 1 bar.

Wie sich aus der vorstehenden Beschreibung ergibt, ist wesentlich für den Rohrdruckmittler, daß die unbelastete Hülse im Bereich der Kammer ein kreisringförmiges Querschnittsprofil hat. Eine geometrisch exakte Kreisform im Schnitt der Außenfläche 40 und der Innenfläche 50 der Hülse 30 ist technisch nicht realisierbar. Dies heißt mit anderen Worten, daß eine gewisse Rundheitsabweichung unvermeidbar ist. Als Rundheitsabweichung wird hier verstanden der Ausdruck (D1 - D2)/D1, wobei D1 der Durchmesser eines äußeren Hüllkreises an die tatsächliche Oberfläche und D2 der Durchmesser eines zum äußeren Hüllkreis konzentrischen inneren Hüllkreises an die tatsächliche Oberfläche ist. Dies ist in Fig. 8 im Querschnitt ausschnittsweise für die Außenfläche 40 der Hülse 30 veranschaulicht. Im Rahmen dieser Beschreibung gelten auch solche Querschnittsprofile als kreisringförmig, bei denen die Rundheitsabweichungen der Innenfläche und der Außenfläche jeweils bis zu 0,2% betragen. In den meisten Anwendungsfällen ist die Rundheitsabweichung deutlich kleiner und liegt sie unterhalb von 0,02%.

Die elastische Verformung der Hülse 30 durch den Systemüberdruck von der Kreisringform zu der beispielsweise durch die Mittellinie 54 veranschaulichten Form setzt Festigkeitsinhomogenitäten in der Wand der Hülse 30 voraus. Derartige Festigkeitsinhomogenitäten sind zwangsläufig in jedem Werkstoff zufällig verteilt vorhanden. Diese natürlichen Festigkeitsinhomogenitäten werden bei dem vorstehend beschriebenen Ausführungsbeispiel ausgenutzt, um die Hülse 30 durch den Systemüberdruck zu verformen. Darüberhinaus können die benötigten Festigkeitsinhomogenitäten auch gezielt herbeigeführt werden, um auf diese Weise die Gestalt des verformten Querschnittsprofils zu beeinflussen bzw. vorzugeben. Eine mögliche Maßnahme hierzu besteht darin, die Hülse 30 zonenförmig zu erwärmen und dadurch Bereiche unterschiedlicher Zugfestigkeit zu erzeugen. Eine solche Hülse hat dann auch bei über den Umfang konstanter Wandstärke örtlich definierte Bereiche unterschiedlicher Festigkeit.

Bei den vorstehend beschriebenen Ausführungsbeispielen hat die Hülse 30 über ihre gesamte Länge konstante Innen- und Außendurchmesser. Abweichend hiervon kann, wie dies in Fig. 9 gezeigt ist, die Hülse im Bereich der Kammer einen größeren Durchmesser sowohl der Außenfläche 40 als auch der Innenfläche 50 haben als an den Enden der Hülse, die an den Anlageflächen 28 anliegen. Hergestellt werden kann eine solche Hülsengeometrie dadurch, daß die Hülse 30 nach dem Einschweißen in das Gehäuse 2 unter so starken hydraulischen Innendruck gesetzt wird, daß die Hülse im Bereich der Kammer 42 plastisch aufgeweitet und gegen die Innenfläche 24 des Gehäuses 2 gedrückt wird. Diese Aufweitung unter plastischer Verformung vergrößert die Festigkeitsinhomogenitäten und ermöglicht dadurch einen geringeren Systemüberdruck. Darüberhinaus verringert diese Aufweitung in erwünschter Weise das Volumen der Kammer 42.

Eine weitere Abwandlung des Rohrdruckmittlers ist anhand von Fig. 10 in einer Fig. 4 ähnlichen Darstellung gezeigt. Bei dem Ausführungsbeispiel gemäß Fig. 10 hat die Außenfläche 40 der Hülse 30 im Bereich der Kammer 42 einen kleineren Durchmesser als die Außenflächen 34 und 36 an den Enden der Hülse, die an den Anlageflächen 28 anliegen. Die Innenfläche 24 sowie die beiden Anlageflächen 28 haben über die gesamte Länge des Gehäuses 2 gleichen Durchmesser. Hergestellt werden kann eine solche Hülse 30 dadurch, daß die Hülse vor dem Einschweißen in das Gehäuse 2 an seinen beiden Enden plastisch aufgeweitet wird. Ein wesentlicher Vorteil dieses Ausführungsbeispiels liegt darin, daß die Herstellung des Gehäuses 2 wesentlich vereinfacht ist, da seine Innenfläche 24 und seine beiden Anlageflachen 28 kreiszylindrische Flächen gleichen Durchmessers sind.

Die Erfindung ist nicht auf die vorstehend anhand der Figuren beschriebenen Ausführungsbeispiele beschränkt.

Der Rohrdruckmittler weist ein rohrförmiges, steifes Gehäuse und eine dünnwandige, rohrförmige Hülse aus einem metallischen Werkstoff auf, die in das Gehäuse eingeschweißt ist und zusammen mit diesem eine Kammer zur Aufnahme einer Füllflüssigkeit begrenzt. Bei unbelasteter Hülse, d.h. Druckgleichheit zwischen dem Inneren der Hülse und der Kammer, hat die Hülse ein kreisringförmiges Querschnittsprofil. Im Betrieb wird die Kammer stets unter einem Druck gehalten, der um so viel größer als der Druck im Inneren der Hülse ist, daß die Hülse örtlich radial nach innen eingebeult ist. Druckänderungen im Inneren der Hülse vergrößern oder verringern diese Einbeulung, so daß in die Kammer ein Arbeitsvolumen der Füllflüssigkeit nachgezogen oder aus der Kammer ein Arbeitsvolumen der Füllflüssigkeit herausgedrückt wird.

Der Rohrdruckmittler weist ein rohrförmiges, steifes Gehäuse und eine dünnwandige, rohrförmige Hülse aus einem metallischen Werkstoff auf, die in das Gehäuse eingeschweißt ist und zusammen mit diesem eine Kammer zur Aufnahme einer Füllflüssigkeit begrenzt. Bei unbelasteter Hülse, d.h. Druckgleichheit zwischen dem Inneren der Hülse und der Kammer, hat die Hülse ein kreisringförmiges Querschnittsprofil. Im Betrieb wird die Kammer stets unter einem Druck gehalten, der um so viel größer als der Druck im Inneren der Hülse ist, daß die Hülse örtlich radial nach innen eingebeult ist. Druckänderungen im Inneren der Hülse vergrößern oder verringern diese Einbeulung, so daß in die Kammer ein Arbeitsvolumen der Füllflüssigkeit nachgezogen oder aus der Kammer ein Arbeitsvolumen der Füllflüssigkeit herausgedrückt wird.

**Patentansprüche**

1. Rohrdruckmittler mit einem rohrförmigen, steifen Gehäuse (2) und einer dünnwandigen, rohrförmigen Hülse (30) aus einem metallischen Werkstoff, die innerhalb des Gehäuses (2) angeordnet ist und mit ihren beiden Enden fluiddicht am Gehäuse (2) befestigt ist, wobei das Innere der Hülse (30) einen Meßraum (44) zur Aufnahme eines Meßstoffes bildet, dessen Druck von innen auf die Hülse (30) wirkt, wobei zwischen der Außenfläche (40) der Hülse (30) und der Innenfläche (24) des Gehäuses (2) eine Kammer (42) ausgebildet ist, die zur Aufnahme einer Übertragungsflüssigkeit bestimmt ist, und wobei die Kammer (42) an ein auf Druck ansprechendes Gerät anschließbar ist, dadurch gekennzeichnet, daß die Hülse (30) im Bereich der Kammer (42) bei Druckgleichheit zwischen Meßraum (44) und Kammer (42) ein kreisringförmiges Querschnittsprofil hat und daß die Hülse (30) im Bereich der Kammer (42) durch relativ höheren Druck in der Kammer (42) als im Meßraum (40) derart elastisch verformbar ist, daß das Volumen der Kammer (42) aufgrund der Verformung größer als bei der Druckgleichheit ist.

2. Rohrdruckmittler nach Anspruch 1, dadurch gekennzeichnet, daß das Gehäuse (2) an seinen beiden Enden jeweils mit einer kreiszylindrischen Anlagefläche (28) für den Kontakt mit den beiden Enden der Hülse (30) versehen ist und daß die beiden Enden der Hülse (30) eine kreiszylindrische Außenfläche (34, 36) aufweisen.

3. Rohrdruckmittler nach Anspruch 2, dadurch gekennzeichnet, daß bei Druckgleichheit Zwischen Meßraum (44) und Kammer (42) die Außenfläche (40) der Hülse (30) im Bereich der Kammer (42) einen größeren Durchmesser als die Außenflächen (34, 36) der Enden der Hülse (30) hat.

4. Rohrdruckmittler nach Anspruch 2, dadurch gekennzeichnet, daß bei Druckgleichheit zwischen Meßraum (44) und Kammer (42) die Außenfläche (40) der Hülse (30) im Bereich der Kammer (42) einen kleineren Durchmesser als die Außenflächen (34, 36) der Enden der Hülse (30) hat.

5. Rohrdruckmittler nach einem der Ansprüche 1 bis 4, dadurch gekennzeichnet, daß die Hülse (30) gefertigt ist aus einem zu einem Kreiszylinder gebogenen Metallblech, das entlang einer Mantellinie des Kreiszylinders an zwei seiner Ränder verschweißt ist.

6. Rohrdruckmittler nach einem der Ansprüche 1 bis 5, dadurch gekennzeichnet, daß die Wand der Hülse (30) Bereiche unterschiedlicher Zugfestigkeit aufweist.

7. Rohrdruckmittler nach einem der Ansprüche 1 bis 6, dadurch gekennzeichnet, daß die Innenfläche (24) des Gehäuses (2) im Bereich der Kammer (42) eine kreiszylindrische Form hat.

8. Meßanordnung mit einem Rohrdruckmittler, der eine mit einer Übertragungsflüssigkeit gefüllte Kammer (42) aufweist, einem Gerät (48), das eine zweite, ebenfalls mit der Übertragungsflüssigkeit gefüllte Kammer aufweist und den Druck der Übertragungsflüssigkeit in der zweiten Kammer anzeigt oder auf andere Weise auf diesen Druck anspricht, und einer Verbindungsleitung (46), die die erste und die zweite Kammer in Strömungsverbindung miteinander hält, dadurch gekennzeichnet, daß der Rohrdruckmittler nach einem der Ansprüche 1 bis 7 ausgebildet ist und daß die Übertragungsflüssigkeit im Betrieb bis zum Nenndruck der Meßanordnung stets unter einem Druck gehalten ist, der größer als der Druck des Meßstoffs im Meßraum (44) des Rohrdruckmittlers ist.

9. Meßanordnung nach Anspruch 8, dadurch gekennzeichnet, daß die Übertragungsflüssigkeit unter einem solchen Druck gehalten ist, daß dieser die Hülse (30) im Bereich der Kammer (42) derart elastisch verformt, daß das Querschnittsprofil der Hülse (30) von der Kreisringform abweicht.

10. Meßanordnung nach Anspruch 8 oder 9, dadurch gekennzeichnet, daß die mit der Übertragungsflüssigkeit gefüllten Räume der Meßanordnung ein nach außen verschlossenes System bilden, in dem die Masse der darin eingeschlossenen Füllflüssigkeit im Betrieb konstant ist.

## Claims

1. Pipe pressure intermediary device comprising a tubular, rigid casing (2) and a thin-walled, tubular sleeve (30) which is made of metallic material, is arranged inside the casing (2) and at both its ends is fluidtightly fastened to the casing (2), the interior of the sleeve (30) forming a measuring chamber (44) to receive a substance which is to be measured and the pressure of which acts from the inside on the sleeve (30), while between the outer surface (40) of the sleeve (30) and the inner surface (24) of the casing (2) a chamber (42) is formed which is intended to receive a transmission fluid, which chamber (42) can be connected to an apparatus responding to pressure, characterized in that when equality of pressure exists between the measuring chamber (44) and the chamber (42) the sleeve (30) has a circular annular cross-sectional profile in the region of the chamber (42), and in that in the region of the chamber (42) the sleeve (30) can be elastically deformed by a relatively higher pressure in the chamber (42) than in the measuring chamber (40) in such a manner that because of the deformation the volume of the chamber (42) is greater than when equality of pressure exists.

2. Pipe pressure intermediary device according to, Claim 1, characterized in that the casing (2) is provided at each of its ends with a respective circular cylindrical contact surface (28) for contact with the two ends of the sleeve (30), and in that the two ends of the sleeve (30) have a circular cylindrical outer surface (34, 36).

3. Pipe pressure intermediary device according to Claim 2, characterized in that when equality of pressure exists between the measuring chamber (44) and the chamber (42) the outer surface (40) of the sleeve (30) has in the region of the chamber (42) a larger diameter than the outer surfaces (34, 36) of the ends of the sleeve (30).

4. Pipe pressure intermediary device according to Claim 2, characterized in that when equality of pressure exists between the measuring chamber (44) and the chamber (42) the outer surface (40) of the sleeve (30) has in the region of the chamber (42) a smaller diameter than the outer surfaces (34, 36) of the ends of the sleeve (30).

5. Pipe pressure intermediary device according to one of Claims 1 to 4, characterized in that the sleeve (30) is made of a metal sheet which is bent into a circular cylinder and which is welded along a generating line of the circular cylinder at two of its edges.

6. Pipe pressure intermediary device according to one of Claims 1 to 5, characterized in that the wall of the sleeve (30) has regions having different tensile strengths.

7. Pipe pressure intermediary device according to one of Claims 1 to 6, characterized in that in the region of the chamber (42) the inner surface (24) of the casing (2) has a circular cylindrical shape.

8. Measuring arrangement comprising a pipe pressure intermediary device having a chamber (42) filled with a transmission fluid, an apparatus (48) which has a second chamber likewise filled with the transmission fluid and indicates the pressure of the transmission fluid in the second chamber or responds otherwise to this pressure, and a connecting pipe (46) which maintains communication in respect of flow between the first and second chambers, characterized in that the pipe pressure intermediary device is constructed in accordance with one of Claims 1 to 7, and in that during operation the transmission fluid is continuously held under a pressure, up to the nominal pressure of the measuring arrangement, higher than the pressure of the substance to be measured contained in the measuring chamber (44) of the pipe pressure intermediary device.

9. Measuring arrangement according to Claim 8, characterized in that the transmission fluid is held under a pressure such that the latter elastically deforms the sleeve (30) in the region of the chamber (42) in such a manner that the cross-sectional profile of the sleeve (30) differs from the circular annular shape.

10. Measuring arrangement according to Claim 8 or 9, characterized in that the chambers of the measuring arrangement which are filled with the transmission fluid form a system which is closed against the outside and in which the mass of the filling fluid enclosed therein is constant during operation.

## Revendications

1. Médiateur de pression pour tuyaux, avec un boîtier tubulaire rigide et une gaine tubulaire (30) de faible épaisseur, réalisée en un matériau métallique, disposée à l'intérieur du boîtier (2) et fixée par ses deux extrémités, de façon étanche aux fluides, sur le boîtier (2), l'intérieur de la gaine (30) constituant une enceinte de mesure (44) pour recevoir une substance de mesure, dont la pression agit depuis l'extérieur sur la gaine (30), une chambre (42), conçue pour recevoir un liquide de transmission, étant réalisée entre la surface extérieure (40) de la gaine (30) et la surface intérieur (24) du boîtier (2), la chambre (42) pouvant être raccordée à un appareil réagissant à la pression, caractérisé en ce que la gaine (30) a, dans la zone de la chambre (42), en cas d'égalité des pressions entre enceinte de mesure (44) et chambre (42), un profil de section transversale en anneau circulaire et en ce que la gaine (30) est déformable élastiquement, dans la zone de la chambre (42), sous l'effet de la pression, régnant dans cette chambre (42) et qui est relativement plus élevée que celle régnant dans l'enceinte de mesure (40), de manière que le volume de la chambre (42), suite à la déformation, soit supérieur à ce qu'il est lorsqu'il y a égalité des pressions.

2. Médiateur de pression pour tuyaux selon la revendication 1, caractérisé en ce que le boîtier (2) est pourvu à chacune de ses deux extrémités d'une surface d'appuis (28) cylindrique et circulaire, pour assurer le contact avec les deux extrémités de la gaine (30), et en ce que les deux extrémités de la gaine (30) ont une surface extérieure (34, 36) cylindrique circulaire.

3. Médiateur de pression pour tuyaux selon la revendication 2, caractérisé en ce qu'en cas d'égalité des pressions entre enceinte de mesure (44) et chambre (42) la surface extérieure (40) de la gaine (30) a, dans la zone de la chambre (42), un diamètre supérieur à celui des surfaces extérieures (34, 36) des extrémités de la gaine (30).

4. Médiateur de pression pour tuyaux selon la revendications 2, caractérisé en ce qu'en cas d'égalité des pressions entre enceinte de mesure (44) et chambre (42), la surface extérieure (40) de la gaine (30) a, dans la zone de la chambre (42), un diamètre inférieur au diamètre des surfaces extérieures (34, 36) de l'extrémité de la douille (30).

5. Médiateur de pression pour tuyaux selon l'une des revendications 1 à 4 caractérisé en ce que la gaine (30) est fabriquée à partir d'une tôle métallique, cintrée en forme cylindrique circulaire et soudée sur deux de ses bords, le long d'une ligne d'enveloppe du cylindre circulaire.

6. Médiateur de pression pour tuyaux selon l'une des revendications 1 à 5, caractérisé en ce que la paroi de la gaine (30) présente des zones à résistances à la traction différentes.

7. Médiateur de pression pour tuyaux selon l'une des revendications 1 à 6, caractérisé en ce que la surface intérieure (34) du boîtier (2) a dans la zone de la chambre (42) une forme cylindrique circulaire.

8. Dispositif de mesure avec un médiateur de pression pour tuyaux, comportant une chambre (42) remplie d'un fluide de transmission, un appareil (48), comportant une deuxième chambre également remplie du liquide de transmission et indiquant la pression du liquide de transmission dans la deuxième chambres ou réagissant d'une autre manière à cette pression, et une conduite de liaison (46), reliant hydrauliquement la première et la deuxième chambres, caractérisé en ce que le médiateur de pression pour tuyaux est réalisé selon l'une des revendications 1 à 7, et en ce que le liquide de transmission est toujours maintenu en fonctionnement, jusqu'à la pression nominale du dispositif de mesure, au dessous d'une pression supérieur à la pression de la substance de mesure se trouvant dans l'enceinte de mesure (44) du médiateur de pression pour tuyaux.

9. Dispositif de mesure selon la revendication 8, caractérisé en ce que le liquide de transmission est maintenu à une pression telle qu'elle déforme élastiquement la gaine (30) dans la zone de la chambre (42), de sorte que le profil de la section transversale de la gaine (30) diffère de la forme en anneau de cercle.

10. Dispositif de mesure selon l'une des revendication 8 ou 9, caractérisé en ce que les enceintes, remplies du liquide de transmission, du dispositif de mesure constituent un système fermé vers l'extérieur, dans lequel la masse du liquide remplissage y étant inclu est constante en fonctionnement.

Fig. 8

Fig. 1

Fig. 2

Fig. 4

Fig. 9

Fig. 10

Fig. 6

Fig. 3

Fig. 7

Fig. 5